# EUROPEAN PATENT APPLICATION

(11) **EP 2 544 281 A1**
(43) Date of publication of application: **09.01.2013**
(21) Application number: 11172716.0
(22) Date of filing: 05.07.2011
(51) Int. Cl.: H01M 4/58, H01M 4/62, H01M 10/0525, H01M 4/485, H01M 4/505, H01M 4/525, H01M 4/131

(54) **Electrode active material for the anode or the cathode of an electrochemical cell**

(71) Applicant: Belenos Clean Power Holding AG, 2502 Bienne (CH)
(72) Inventor: The designation of the inventor has not yet been filed
(74) Representative: Giraud, Eric

(57) **Abstract**

Described is an electrode active material for an electrochemical cell, said electrode active material being a borate (BO₃) compound of formula : AₐM_{b}O_{d}(BO₃)_{c} wherein:
- "A" is at least one alkali metal selected from Li, Na, K ; and 0≤*a*≤0.75;
- "M" is M'ₓM"_{y}, wherein M' is at least one redox active element, M" is at least one non-redox active element; and *x + y* = *b*, with 0.03 < *b* ≤ 0.45 ;
- "BO₃" is the borate anion; *c*≥b+0.03 and *c*≤0.75, with *a* + *b* + *c* = *1*;
- "O" is oxygen ; and -0.1 ≤ *d* ≤ 0.1 .

## Description

### Technical Field

This invention relates to a new and improved electrode active material (EAM) for anodes and cathodes of an electrochemical cell and to an electrode for an electrochemical cell comprising such EAM, in particular to an electrode active material with enhanced electrochemical exchange capacity.

### Background Art

The phosphate LiFePO₄ is a known compound that has already been described in 1967 and that has entered recently into industrial applications in the field of rechargeable batteries [1, 2]. The electrochemically inactive phosphate serves as a linker of the transition metal (T) groups that are present in the crystal lattice as TO₆ octahedrons. LiFePO₄ delivers a theoretical capacity of 170 Ah/kg at an average voltage of 3.5V.

More recently, a number of studies have contemplated replacing the PO₄ polyanion with the much lighter BO₃ group. In particular, the three compounds LiFeBO₃, LiMnBO₃ and LiCoBO₃ were investigated with respect to electrochemical cathode application and found to have an insufficient capacity and in addition very little electronic conductivity leading to low power density [3]. However, as disclosed in pending patent application N°PCT/EP2011/055733, these three compounds turn out to be better suited than LiFePO₄ for cathode applications provided that they are prepared in the form of nanoparticles.

The electrochemical performance of cathode materials is still a crucial limiting factor for high energy density batteries and an increase of capacity is pivotal. Thus there is a great need for an improved cathode material and an improved rechargeable battery comprising such a cathode material, in particular a battery with high stability over many charging-discharging cycles and/or improved capacity.

### Disclosure of the Invention

Hence, it is a general object of the invention to provide an electrode active material for the anode or the cathode of an electrochemical cell with enhanced electrochemical exchange capacity per weight unit than hitherto used LiFePO₄ and even than previously disclosed LiMnBO₃ and LiFeBO₃.

Further objects are electrodes comprising such electrode active material and batteries comprising such electrodes and methods for producing such materials.

Now, in order to implement these and still further objects of the invention, which will become more readily apparent as the description proceeds, the electrode active material of the present invention has the distinguishing feature that it is a borate (BO₃) compound of formula : AₐM_{b}O_{d}(BO₃)c wherein:
- "A", "M", "O" and "BO₃" are the components of the compound; and "a", "b", "c" and "d" are the respective molar concentrations of the components;
- "A" is at least one alkali metal selected from Li, Na, K ; and 0 ≤ *a* ≤ 0.75 ;
- "M" is M'ₓM"_{y}, wherein M' is at least one redox active element, M" is at least one non-redox active element, and *x* + *y* = *b*, with 0.03 ≤*b*≤ 0.45 ;
- "BO₃" is the borate anion ; *c* ≥ *b*+0.03 and *c*≤0.75, with *a* + *b* + *c* = *1*;
- "O" is oxygen ; and -0.1 ≤ *d* ≤ 0.1 .

In a particular embodiment, M' is at least one redox active transition metal, and in a specific instance of this particular embodiment, x is b and y is 0.

Suitable borate-based compounds are e.g. AₐM_{b} M'ₓM"_{y}B_{c}O_{3c+d} wherein M' is an element or a mixture of elements selected from = Ti, V, Cr, Mn, Fe, Ni, Co, Cu, Si, Sn, Pb, Zr, Mo preferably Ti, V, Cr, Mn, Fe, Cu. Furthermore, if y is not 0, then M" is an element or a mixture of elements selected from Mg, Ca, Zn, Sr, Cd, Ba. Be. Al, Sc, Y, La, B, Ga, In and mixtures thereof. In the presently claimed compounds, the concentration of the borate polyanion (c) is greater than the concentration of the metal or metalloid (b). Such compounds were found to be better suited for the cathode application than LiFeBO₃, LiMnBO₃ or LiCoBO₃. The advantage of the claimed AₐM_{b} M'ₓM"_{y}B_{c}O_{3c+d} compounds with respect to known compounds containing just one BO₃ polyanion per metal or metalloid atom is an enhancement of the specific electrochemical lithium exchange capacity which, for the manganese compound Li₂Mn_{0.33}BO₃ amounts to 295 Ah/kg to LiMn_{0.33}BO₃ and amounts to 320 Ah/kg to Mn_{0.33}BO₃.

As the new electrode materials may exhibit low ionic end electronic conductivity this obstacle can be overcome by utilizing nanoparticles of such electro-active materials.

Examples for such borates are Li₂Mn_{0.33}BO₃, Li_{2.36}Mn_{0.32}BO₃. and Li_{1.835}Mn_{0.44}BO₃ that were all three synthesized in nanoscopic form leading to much improved results.

To enhance the electric performance of the nanoparticles conductive coatings, e.g. carbon and/or graphene coatings or coatings obtained by pyrolysis of various organic precursors, such as e.g. sugars, may be applied to the particles. Such coatings proved suitable for producing cathodes and also anodes that quickly gain the optimal features and retain them over many charging/discharging cycles.

In the scope of the present invention it was also found that the cathode material enhances thermal stability of the battery. This is provided by the involatile borates which tend to form an inert coating of borate glass on the nanoparticle surface at elevated temperatures.

Electrodes with such nanoparticulate materials can be prepared by mixing such nanoparticles with electronically conducting particles such as carbon black and/or graphite and a binder or - in an alternative embodiment - with a nanoparticulate electronically conducting binder, optionally in the presence of further conducting particles such as carbon black and/or graphite, or by applying a pyrolysis reaction performed such that the nanoparticulate EAM is conductively coated and simultaneously bonded.

The electrode coatings are preferably open porous materials. An open porous material means that the pores are so large and so interconnected that electrolyte and Li⁺-diffusion is easily possible.

As already mentioned above, in case that the EAM particles are of an insulating material or in order to improve their conductivity, the nanoparticles are coated with a conductive layer, in particular with a carbon or graphite or graphene layer.

Alternatively, the nanoparticulate cathode material and/or the nanoparticulate anode material may be bonded by a pyrolyzed layer that simultaneously acts as conductive coating and as binder. Such pyrolysis may be performed in that the EAM, a pyrolysis precursor such as a sugar, and a soluble lithium source are suspended or dissolved in a suitable solvent such as e.g. water and/or alcohols. The solvents are evaporated at mild conditions and then the dried product is pyrolized at temperatures of 250 to 700°C, in particular 400-600°C.

This method may analogeously be applied for producing conductively coated nanoparticulate EAM that are bonded by other methods.

The good behavior of such electrodes is assumed to be due to the nanoparticulate EAM being coated with a lithium ion conducting coating comprising primarily carbon but also oxygen, lithium and hydrogen.

Methods for producing nanoparticulate EAM, coating nanoparticulate EAM, and producing a nanocomposite anode are described below.

The EAM may be prepared via pyrolysis or via solvent chemistry such as the sol-gel method, or by gas treatment of metals in the absence of oxygen.

A suitable method for producing borates of the present invention is via a sol-gel method. Said method comprises preparing stable sols, in the stoichiometric ratio, of a Li salt and a transition metal salt soluble in non aqueous protic solvent such as polyols, e.g. ethylene glycols and glycerin, or propionic acid and adding a solution of a borate precursor such as a boron alcoholate, e.g. B(OEt)₃, boric acid, HBO₃, or soluble borates in a suitable solvent, e.g. polyols such as ethylenen glycol, glycerin etc., or for B(OEt)₃ preferably a mixture of the non aqueous protic solvent and an alcohol such as ethanol. Then, the composition is hydrolysed by adding water and finally the solvents are evaporated resulting in a gel powder.

The gel powder may be annealed, e.g. in a graphite crucible, at 600-1100°C in an atmosphere with reduced oxygen content, e.g. under vacuum or inert gas, for generating the borate.

The advantages of a rechargeable battery using a borate cathode according to the present invention is primarily the light weight or the higher capacity per mass unit compared to phosphate cathodes and even compared to known borate cathodes.

Such cathodes may be used in rechargeable lithium ion battery in combination with any anode, preferably however in connection with an electrolyte selected from LiPF₆ in a mixture of ethylene carbonate with ethyl methyl carbonate and/or dimethyl carbonate. The anode may be any known anode, in particular also an anode with nanoparticulate EAM and preferably also nanoparticulate CB, or nanoparticulate EAM coated and bonded by a pyrolysis method.

Such cathodes are suitable for being used with a broad variety of anodes.

### Brief Description of the Drawings

The invention will be better understood and objects other than those set forth above will become apparent when consideration is given to the following detailed description thereof. Such description makes reference to the annexed drawings, wherein the Figures represent:
Figure 1: theoretical (lower curve) and experimental (upper curve) XRD powder pattern for Li₂Mn_{0.33}BO₃.
Figure 2: theoretical (lower curve) and experimental (upper curve) XRD powder pattern for Li_{2.36}Mn_{0.32}BO₃.
Figure 5: cyclic voltammetry curve (voltammogram) for a third cycle between 2.0-4.5 Volts. The electrode active material is Li₂Mn_{0.33}BO₃.
Figure 6: Differential capacity plot from galvanostatic measurements at different cycles, taken at 0.1mA (2.0-4.6 V)

### Modes for Carrying Out the Invention

As already mentioned above, a general object of the invention is to provide an improved light weight cathode material, i.e. a cathode materials with a larger lithium exchange capacity.

### Electronically active materials

Example 1 : Sol-gel synthesis of Li_{0.641}Mn_{0.087}(BO₃)_{0.272} (Li_{2.36}Mn_{0.32}BO₃).

The synthesis of Li_{2.36}Mn_{0.32}BO₃ was accomplished by a sol-gel route that was previously applied by Maia et. al. [4] for the synthesis of Y_{0.9}Er_{0.1}Al₃(BO₃)₄ nanopowders.

To prepare stable sols, 0.03 mol LiNO₃ and 0.01 mol Mn(NO₃)₂.4H₂O were dissolved in 25 ml propionic acid at 80°C for 3 hours. Similarly, 0.01 mol B(OEt)₃ was added into a mixture of 30ml propionic acid-55ml ethanol and heated at 80 °C/3h. The two solutions were mixed and continued to be heated at 80°C for 1 hour. Then, 5 mol of water were added into the solution for the hydrolysis. The final solution was evaporated at 80-100° C and the gel powder was obtained.

In order to obtain single crystals, the gel powder was put in a glassy carbon crucible and annealed at 850°C/24h in a roughly vacuumed quartz tube (2.0 x 10⁻¹ mbar). Then, the system was cooled down to 700°C with a cooling rate of 10°C/h and quenched to room temperature from 700°C. Colourless crystals of Li_{2.36}Mn_{0.32}BO₃ were obtained at the end of the process along with MnO (Manganosite).

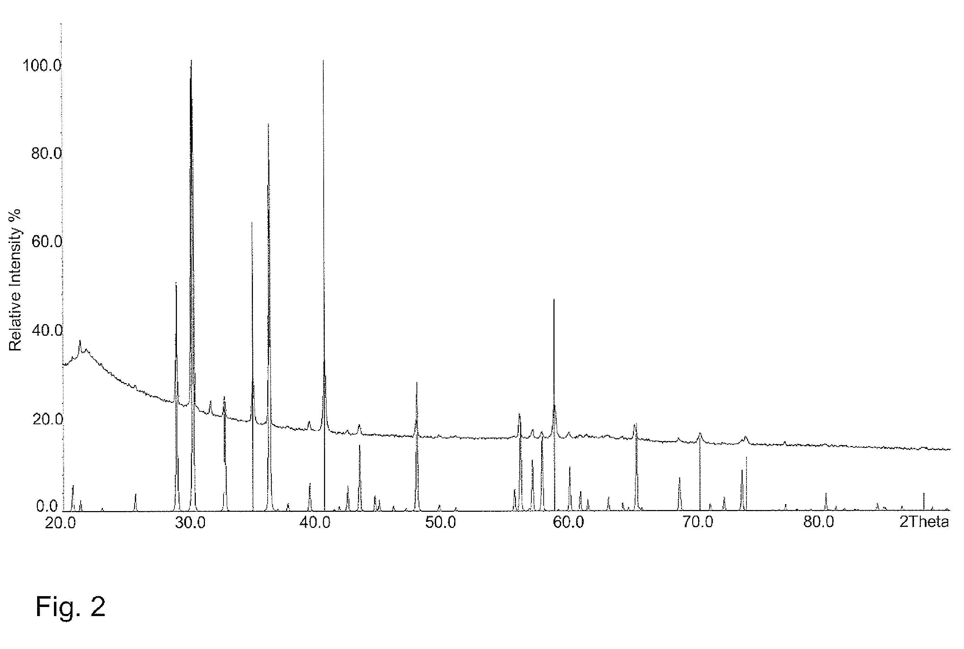

The XRD powder pattern of the product is illustrated in figure 2. Lines marked with a star (*) correspond to the manganosite (MnO). As can be seen, the experimental pattern matches the theoretical pattern quite well.

### Example 2 : Sol-gel synthesis of Li_{0.60}Mn_{0.10}(BO₃)_{0.30} (Li₂Mn_{0.33}BO₃)

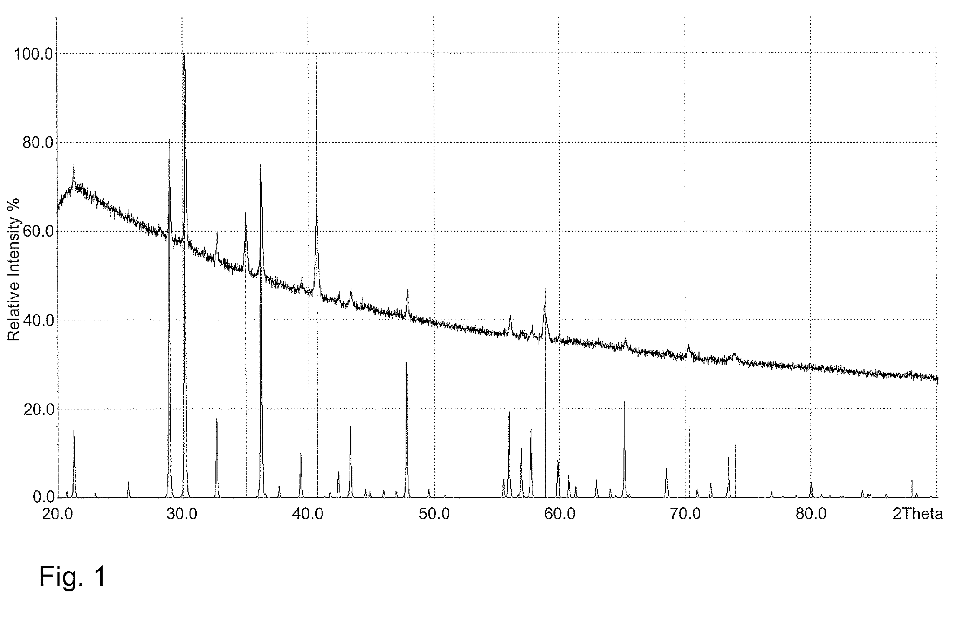

Li₂Mn_{0.33}BO₃ was produced following the above described procedure up to the step of cooling down the system to 700° C. Then instead of quenching it to room temperature, the system was first held at 700°C for 72 hours, and then cooled slowly until it reached room temperature. Colourless crystals were obtained at the end of the process. Electron density showed that the crystals were Li₂Mn_{0.33}BO₃ along with MnO (Manganosite) . The XRD powder pattern of the product is illustrated in figure 1. Lines marked with a star (*) correspond to the manganosite (MnO). As the XRD powder pattern of the sample is directly comparable to the pattern of the Li_{2.36}Mn_{0.32}BO₃ sample (figure 2), the presence of Li_{2.36}Mn_{0.32}BO₃ crystals along with the Li₂Mn_{0.33}BO₃ crystals in the sample can not be excluded.

### Example 3: Sol-gel synthesis of Li_{0.560}Mn_{0.135}(BO₃)_{0.305} (Li₁.₈₃₅Mn_{0.44}BO₃).

In order to prepare stable sols, in the stoichiometric ratio, 0.0236 mol LiNO₃ and 0.0032 mol MnNO₃.4H₂O were dissolved in 15 ml propionic acid at 80 °C for 3 hours. Similarly, 0.01 mol B(OEt)₃ was added into a mixture of 30ml propionic acid-55ml ethanol and heated at 80°C/3h. The two solutions were mixed and continued to be heated at 80° C for 1 hour. Then, 5 mol of water were added into the solution for the hydrolysis. The final solution was evaporated at 80-100° C and the gel powder was obtained.

Single crystals were then produced following the same procedure already described in Example 1. Colourless crystals of Li_{1.835}Mn_{0.44}BO₃ were obtained at the end of the process along with an unidentified impurity, which was thought to be Li₄B₂O₅.

### Example 4: Solid state synthesis of Li_{0.560}Mn_{0.135}(BO₃)_{0.305} (Li_{1.835}Mn_{0.44}BO₃)

The starting materials, Li₂CO₃, MnO and H₃BO₃ were mixed and grinded in an agate mortar with elemental ratio of 2.36Li:0.32Mn:1B, and then the powder mixture was pressed into pellets. In order to obtain the single crystals, the pressed pellets were put into a glassy carbon crucible and annealed at 850°C/24h in a roughly vacuumed quartz tube (2.0 x 10⁻¹ mbar). Then, the system was cooled down to 700°C with a cooling rate of 10°C/h and quenched to room temperature from 700°C. Colourless crystals of Li₁.₈₃₅Mn₀.₄₄BO₃ were obtained at the end of the process along with an unidentified impurity.

### Example 5: Microwave synthesis of Li₂Mn₀.₃₃BO₃

The synthesis of Li₂Mn₀.₃₃BO₃ was accomplished along the lines of the previously published processes for BPO₄ microwave synthesis [6] and for LiFePO₄/C microwave synthesis [7].

The starting materials, Li₂CO₃ (2.29g, Merk) or LiOH-H₂O (1.30g, Chemetall), H₃BO₃ (1.92g, Fluka), Mn(NO₃)₂-xH₂O (2.87g, Aldrich), were stoichiometrically mixed with D-(+)-glucose (2.87g, Aldrich) by hand-milling. The mixture was transferred into a glass crucible. The crucible was put into a homemade microwave oven (900W, 2.45GHz) and was heated until the appearance of heavy smoke signalled decomposition of the product. At that moment, the microwave was stopped. The obtained powder was then annealed at 800°C for 1h30 in a closed crucible. The resulting powder proved to be crystals of Li₂Mn_{0.33}BO₃ along with an unidentified impurity.

### Electrochemical measurements

For the electrochemical measurements, powder obtained by the synthesis route described in Example 5 was mixed with acetylene black and polyvinylidene fluoride (PVDF) at a weight ratio of 80:15:5 in a N-methyl-2-pyrolidine (NMP) solution. The obtained paste was cast on an aluminium current collector, dried in an oven at 60°C overnight, and pressed and cut into 1.3cm² discs.

Half cells were assembled against metallic lithium. Wittman glass fiber was used as the separator membrane. The electrolyte was 1 M lithium hexafluorophosphate (LiPF₆) dissolved in ethylene carbonate (EC)/dimethylcarbonate (DMC).

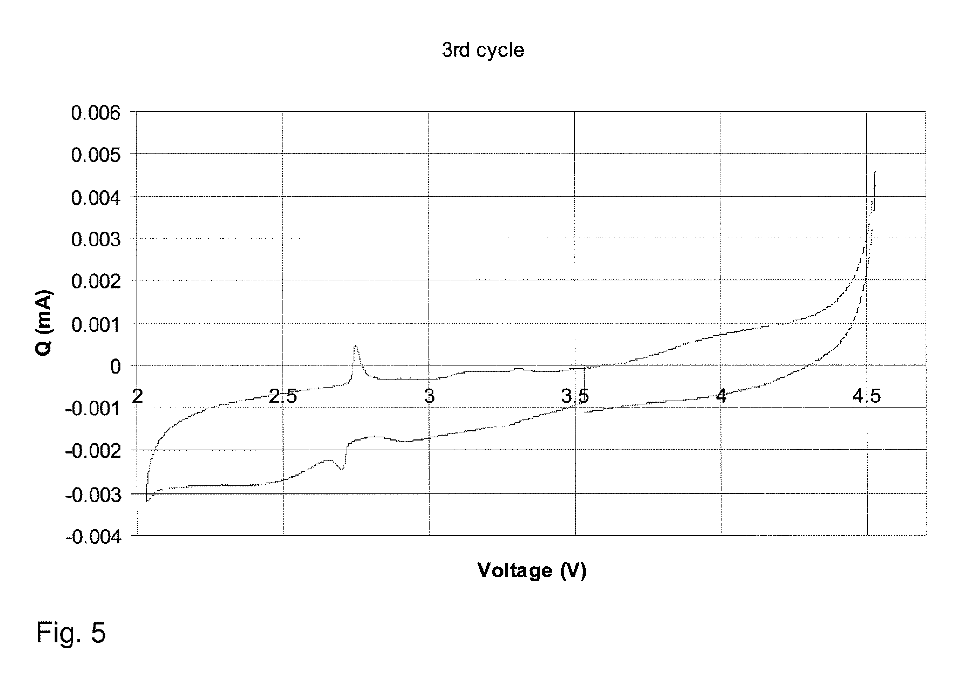

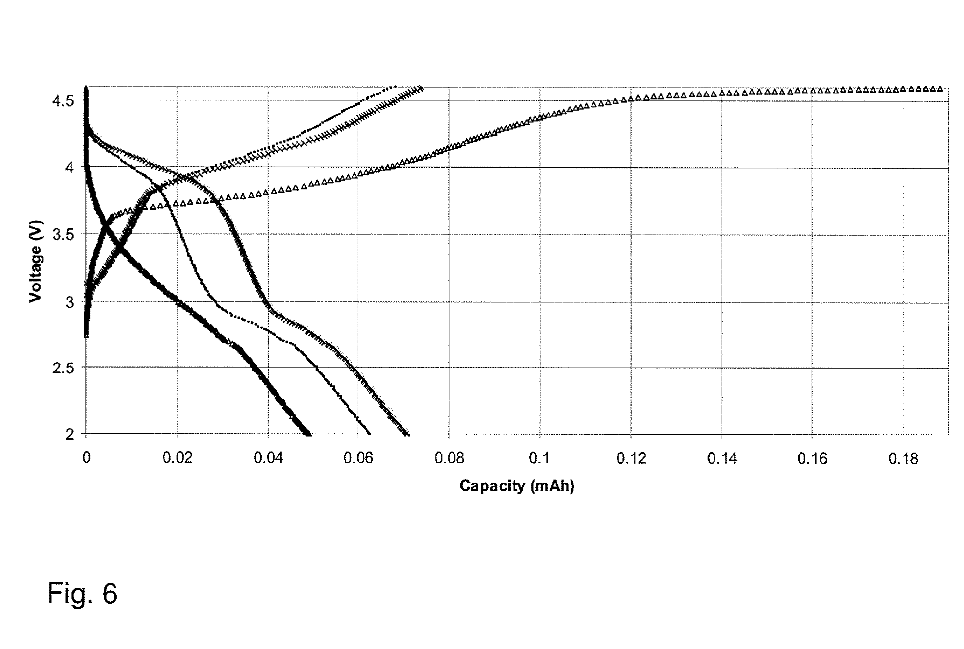

Half cells were used to carry out cyclic voltammetry experiments in the range of 2.0-4.5 V using an EC-lab apparatus from Princeton Applied Research. Cells were also cycled galvanostatically in the range of 2.0-4.6V at a specific current based on the weight of active material (Li₂Mn_{0.33}BO₃) in the electrode and using a Maccor Inc. galvanostat. The results are summarized by the cyclic voltammogram of Figure 5 and the differential capacity plot of Figure 6.

As can be seen in Figure 5, the voltammogram shows a peak around 2.7 V and a broader peak around 4.1 V. Figure 6 shows the differential capacity curves for three cycles. The curves for the first cycle are drawn as strings of small triangles, the curves for the 20^{th} cycle are drawn as a string of dots, and the curves for the 40^{th} cycle are drawn as slashed line.

The examples given herein show that nanocrystalline Li₂Mn_{0.33}BO₃ powder can be electrochemically lithiated, more specific that claimed compounds can reversibly intercalate lithium without any structural change. Electrodes with Li₂Mn_{0.33}BO₃ electroactive material were tested as cathodes in a lithium-ion battery. The result show that the claimed electroactive material is promising for next generation anodes or cathodes for electrochemical cells.

While there are shown and described presently preferred embodiments of the invention, it is to be distinctly understood that the invention is not limited thereto but may be otherwise variously embodied and practiced within the scope of the following claims.

### Literature

[1] Santoro, R.P. and Newman, R.E. "Antiferromagnetism in LiFeP04", Acta Crystellogr., 22, 344-347 (1967)
[2] Padhi, A.K., Nanjundaswamy, K.S. & Goodenough, J.B., J. Electrochem. Soc., 144, 1188 (1997)
[3] V. Legagneur, Y. An, A. Mosbah, R. Portal, A. Le Gal La Salle, A. Verbaere, D. Guyomard and Y. Piffard, Solid State Ionics, 139, 37 (2001).
[4] L.J.Q. Maia, V.R. Mastelaro, S. Pairis, A. C. Hernandes, A. Ibanez, "A sol-gel route for the development of rare-earth aluminum borate nanopowders and transparent thin films", J. Solid State Chem., 180, 611-18 (2007)
[5] Yong-Jun Li, Wei-Jun Huang, and Shi-Gang Sun, Angewandte Chemie, 118, 2599 (2006).
[6] Baykal A, Kizilyalli M, Toprak M, Kniep R, "Hydrothermal and Microwave Synthesis of Boron Phosphate, BPO4", Turk. J. Chem., 25, 425 (2001).
[7] Hongli Zou, Guanghui Zhang, Pei Kang Shen, "Intermittent microwave heating synthesized high performance spherical LiFePO4/C for Li-ion batteries" Mat. Res. Bull., 45, 149 (2010).

## Claims

1. An electrode active material for the anode or the cathode of an electrochemical cell, said electrode active material being a borate (BO₃) compound of formula : AₐM_{b}O_{d}(BO₃)_{c} wherein:
- "A", "M", "0" and "BO₃" are components of the compound; and "a", "b", "c" and "d" are the respective molar concentrations of said components;
- "A" is at least one alkali metal selected from Li, Na, K ; and 0≤*a*≤0.75;
- "M" is M'ₓM"_{y}, wherein M' is at least one redox active element, M" is at least one non-redox active element; and *x* + *y* = *b*, with 0.03 < *b* ≤ 0.45 ;
- "BO₃" is the borate anion; *c* ≥ *b*+0.03 and *c*≤0.75, with *a + b + c* = *1*;
- "O" is oxygen ; and -0.1 ≤ *d* ≤ 0.1 .

2. The electrode active material of claim 1, wherein said at least one redox active element (M') is a transition metal.

3. The electrode active material of claim 2, wherein the redox active transition metal (M') is selected from Ti, V, Cr, Mn, Fe, Ni, Co, Cu, in particular Ti, V, Cr, Mn, Fe, Cu.

4. The electrode active material of claim 3, wherein M' is Mn.

5. The electrode active material of claim 1, wherein said at least one redox active element (M') is selected from Si, Sn, Pb.

6. The electrode active material of any one of the preceding claims, wherein x = b and y = 0.

7. The electrode active material of any one of claims 1 to 5, wherein said at least one non-redox active element (M") is selected from Be, Mg, Ca. Sr, Ba, Zn, Cd.

8. The electrode active material of any one of claims 1 to 5, wherein said at least one non-redox active element (M") is selected from Sc, Y, La, B, Al, Ga, In.

9. The electrode active material of any of the preceding claims, wherein A is Li.

10. The electrode active material of any of the preceding claims, wherein the electrode active material is in the form of nanoparticles.

11. The electrode active material of claim 10, wherein the nanoparticles are single crystals.

12. The electrode active material of claim 10 or 11, wherein the nanoparticles are conductively coated.

13. The electrode active material of claim 10, 11 or 12, wherein the nanoparticles are bound together and to the conductor by means of conducting binder nanoparticles.

14. An electrode for an electrochemical cell comprising an electrode active material according to any of the preceding claims.

15. The electrode of claim 14, wherein the electrode is a cathode.

16. A battery comprising an electrode according to claim 14 or 15.
